# EUROPÄISCHE PATENTSCHRIFT

(11) **EP 1 992 830 B1**
(45) Veröffentlichungstag und Bekanntmachung des Hinweises auf die Patenterteilung: **19.06.2013**
(21) Anmeldenummer: 08007378.6
(22) Anmeldetag: 15.04.2008
(51) Int. Cl.: F16D 13/58, F16D 13/75

(54) **Reibungskupplung mit integriertem Verschleißausgleich**
Friction coupling with integrated abrasion compensation
Embrayage à friction à compensation d'usure intégrée

(30) Priorität: 14.05.2007 DE 102007022538
(43) Veröffentlichungstag der Anmeldung: 19.11.2008
(73) Patentinhaber: Schaeffler Technologies AG & Co. KG, 91074 Herzogenaurach (DE)
(72) Erfinder: Ahnert, Gerd, 77880 Sasbach (DE)

(56) Entgegenhaltungen:
- WO-A1-2006/105750
- FR-A1- 2 816 683
- US-A- 5 349 882
- US-A1- 2004 069 587

## Beschreibung

Die Erfindung betrifft eine Reibungskupplung mit integriertem Verschleißausgleich gemäß dem Oberbegriff des Patentanspruchs 1.

Insbesondere bei automatisierten Reibungskupplungen, wie sie in Antriebssträngen moderner Kraftfahrzeuge eingesetzt werden, ist eine integrierte Verschleißnachstellung vorteilhaft, mittels der eine Kennlinie, die das übertragbare Kupplungsmoment in Abhängigkeit von der Stellung eines Aktors oder eines Betätigungsgliedes der Kupplung angibt, weitgehend unabhängig von einem Verschleiß der Reibbeläge der Kupplung konstant bleibt.

Aus der US 5,349,882 ist eine Schwungrad-Reibungskupplung-Anordnung bekannt, die auf den Oberbegriff des Patentanspruchs 1 lesbhar ist. WO 2006/105 750 zeigt eine andere Reibungskupplung.

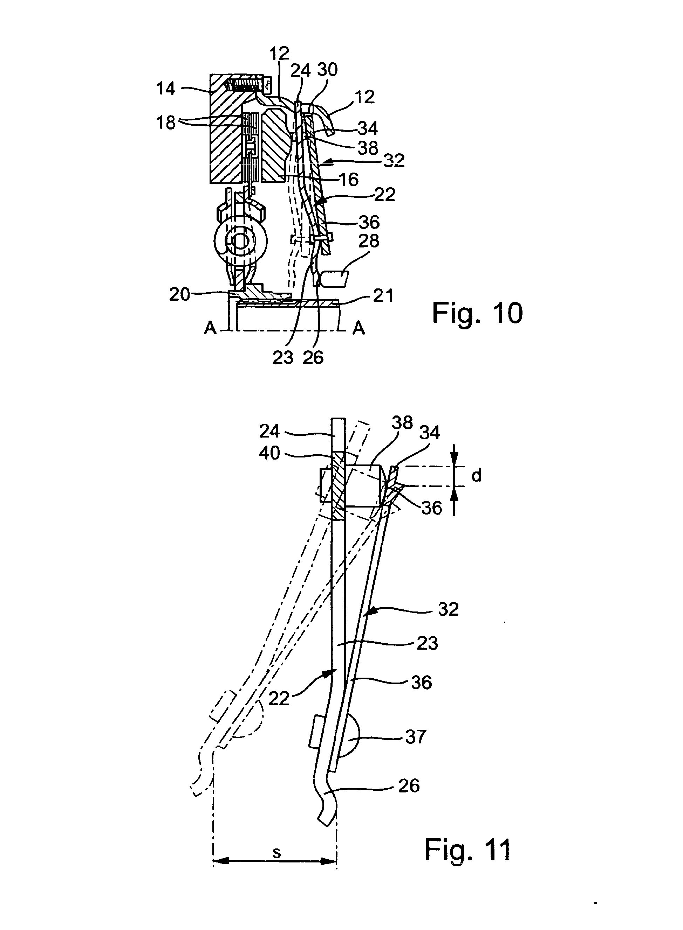

Fig. 10 zeigt einen Halbschnitt durch eine weitere, an sich bekannte Reibungskupplung mit einer Drehachse A-A.

Die Kupplung enthält einen Deckel bzw. ein Gehäuse 12, der bzw. das starr mit einer Gegendruckplatte 14 und drehfest mit einer Schwungscheibe (nicht dargestellt) einer Brennkraftmaschine verbunden ist. Weiter ist eine mit dem Gehäuse 12 drehfest, jedoch axial verschiebbar verbundene Anpressplatte 16 vorgesehen, mit der Reibbeläge 18, die beidseitig an einer Kupplungsscheibe 20 angebracht sind, gegen die Gegendruckplatte 14 pressbar sind. Die Kupplungsscheibe 20 ist drehfest mit einer Welle 21, beispielsweise einer Getriebeeingangswelle, verbunden.

Zum axialen Bewegen der Anpressplatte 16 ist ein insgesamt als ringscheibenförmige Blattfeder ausgebildeter Federhebel 22 vorgesehen, der einzelne, in Umfangsrichtung nebeneinander angeordnete, radial einwärts gerichtete und radial außen über einen in Umfangsrichtung geschlossenen Ringscheibenbereich 24 miteinander verbundene Federzungen 23 aufweist. Im dargestellten Beispiel stützt sich der Federhebel 22 am äußeren Umfang des Ringscheibenbereichs 24 am Gehäuse 12 ab und ist an seinem inneren Umfangsrand 26 mittels eines Betätigungsbauteils 28 axial bewegbar. Das Betätigungsbauteil 28 enthält beispielsweise ein mit der Achse A-A konzentrisches Ringlager, so dass eine lineare Bewegung eines ortsfesten Aktors in eine lineare Bewegung des inneren Umfangsrandes 26 des Federhebels 22 umsetzbar ist.

Der Federhebel 22 liegt radial einwärts seines äußeren Umfangsrandes an der Anpressplatte 16 an und stützt sich an dem Gehäuse 12 über einen Rampenring 30 ab, dessen Rampenflächen mit entsprechenden am Gehäuse 12 oder dem Federhebel 22 ausgebildeten Gegenflächen zusammenwirken, um bei einer Verdrehung des Rampenrings 30 relativ zu dem Gehäuse 12 oder dem Federhebel 22 die dargestellte Ruhestellung des Federhebels 22 in Richtung auf die Gegendruckplatte 14 zu verschieben und dadurch einen Verschleiß der Reibbeläge 18 auszugleichen.

Die mit durchgezogenen Linien dargestellte Stellung des Federhebels 22 entspricht dem offenen bzw. nicht eingerückten Zustand der Kupplung. Die gepunktet eingezeichnete Stellung entspricht der Stellung des Federhebels 22, in der die Kupplung zugedrückt bzw. eingerückt ist.

In an sich bekannter Weise kann die Kupplung durch einfache Umkonstruktion als zugedrückte, zugezogene oder aufgedrückte bzw. aufgezogene Kupplung konstruiert sein.

Zur Verdrehung des Rampenrings 30 dient eine an der von der Anpressplatte 16 abgewandten Seite des Federhebels 22 am Federhebel 22 angebrachte Antriebsfeder 32, die insgesamt konzentrisch zum Federhebel ist und einen radial äußeren umlaufenden Ringteil 34 aufweist, der durch einen in Fig. 10 nicht sichtbaren radialen Zwischenraum bzw. Spalt in Umfangsrichtung unterbrochen ist. Von dem Ringteil 34 gehen radial einwärts Speichen 36 aus, die mittels Nieten 37 mit den Federzungen 23 des Federhebels 22 verbunden sind. Die Antriebsfeder 32 stützt sich an dem Federhebel 22 in ihrem radial äußeren Bereich über Distanzstücke 38 ab, die beispielsweise mit dem Federhebel 23 vernietet sind und zu dem Ringteil 34 hin eine ballige Oberfläche aufweisen.

Die kinematischen Verhältnisse sind anhand der Fig. 11 verdeutlicht, die einen Ausschnitt der Fig. 10 darstellt, wobei die Distanzstücke 38 vergrößert gezeichnet sind.

Wenn die Kupplung eingerückt wird, wird der Federhebel 22 an seinem inneren Umfangsrand 26 um die Strecke s nach links bewegt und schwenkt unter konischer Verformung um seine Abstützung am Gehäuse 12. Beim Verschwenken des Federhebels 22 bleibt der Abstand zwischen den Nieten 37 und dem Ringscheibenbereich 24 im Wesentlichen konstant, so dass sich das durch den Federhebel 22, die Antriebsfeder 32 und das Distanzstück 38 gebildete Dreieck derart verformt, dass sich die Antriebsfeder 32 unter Abgleiten auf dem Distanzstück 38 mit ihrem Ringteil 34 um die Strecke d radial einwärts bewegt. Dadurch vermindert sich der Umfang des Ringteils 34.

Die in Fig. 10 und 11 dargestellten Verformungen sind jeweils konische Verformungen des Federhebeis 22 bzw. der Antriebsfeder 32. Das Distanzstück 38 kann auch durch eine entsprechende Formgebung des Federhebels 22 selbst ersetzt werden.

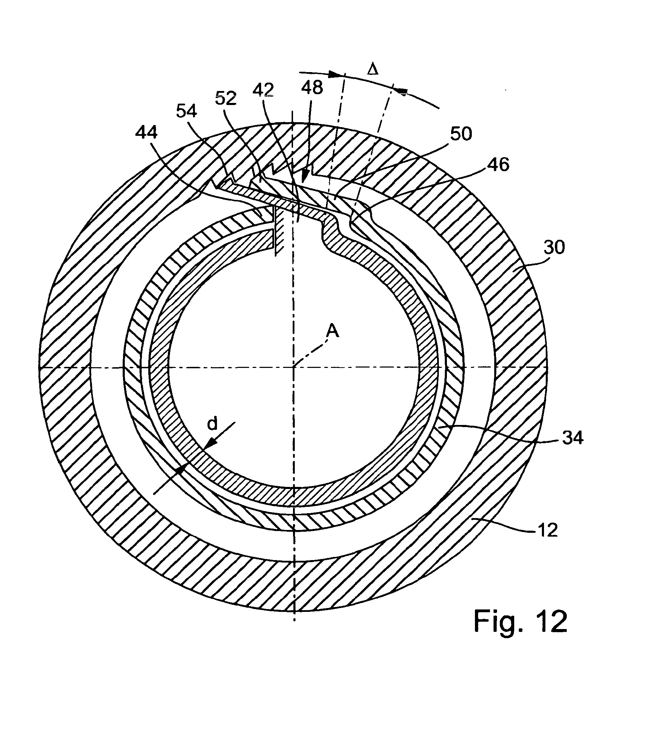

Fig. 12 verdeutlicht die Verhältnisse in Aufsicht und zeigt zusätzlich weitere funktionswesentliche Details der Anordnung. Der Ringteil 34 ist in Umfangsrichtung unterbrochen bzw. mit einem radialen Spalt 42 ausgebildet. Ein dem Spalt 42 benachbarter Endbereich 44 des Ringteils 34 ist zumindest in Umfangsrichtung relativ zu dem Federhebel 22 fixiert. Der andere, an den Spalt 42 grenzende Endbereich 46 des Ringteils 34 ist mit einer Klinke 48 versehen, die einen im dargestellten Beispiel den Spalt 42 radial außen überlagernden Federarm 50 aufweist, der an seinem freien Ende wenigstens einen Zahn 52 aufweist, der von dem Federarm 50 radial auswärts in Eingriff in eine Verzahnung 54 gedrängt ist, die an dem Rampenring 30 ausgebildet ist. Wie ersichtlich, ist der Zahneingriff derart, dass bei einer Bewegung der Klinke 48 relativ zu der Verzahnung 54 in Gegenuhrzeigerrichtung die Klinke die Verzahnung unter elastischer Verformung des Federarms 50 im Sinne eines Freilaufes überläuft, wohingegen in Gegenrichtung ein Drehmoment übertragender Eingriff zwischen dem Zahn 52 und der Verzahnung 54 besteht.

Wenn der Ringteil 36 aus der ausgezogenen Stellung, die der nicht betätigten Stellung der Kupplung entspricht, durch Betätigen der Kupplung um den Radialweg d nach innen gezogen wird (gestrichelt dargestellte Stellung), deckt die aufgrund seiner konstanten Umfangslänge einen größeren Winkelbereich ab, d.h. die Breite des Spaltes 42 nimmt um das Maß Δ ab. Da der Endbereich 44 des Ringteils 36 in tangentialer Richtung festgelegt ist, führt dies zu einer Tangentialbewegung um die Strecke Δ des mit der Klinke 48 versehenen Endbereiches 46 des Ringteils 34. Dies wird dadurch ermöglicht, dass der Ringteil 34 über wiegeweiche Speichen 36 (in Fig. 12 nicht dargestellt) mit dem Federhebel 22 verbunden ist und die Berührstellen zwischen dem Ringteil 34 und den Distanzstücken 38 eine tangentiale Gleitbewegung zulassen. Durch diesen Mechanismus entsteht ein nahezu lineares Verhältnis zwischen Einrückweg bzw. Schwenkwinkel des Federhebels 22 und dem Tangentialweg Δ der Antriebsfeder 32 bzw. von deren Ringteil 34. Im Normalfall reicht der Tangentialweg an der Klinke 48 nicht aus, um einen Zahn der Verzahnung 54 zu überspringen. Mit zunehmendem Kupplungsverschleiß erhöht sich jedoch die Tangentialbewegung und die Klinke erreicht die nächste Zahnlücke. Beim nachfolgenden Öffnen der Kupplung, das gegebenenfalls über die Offenstellung der Kupplung hinaus bis in eine gezielte angefahrene Nachstellung erfolgen kann, schiebt der Ringteil 36 die Klinke 48 fest in die Verzahnung 54 zurück und nimmt bei der weiteren Rückverformung des Federhebels den Rampenring 30 mit, so dass der Rampenring 30 insgesamt relativ zu dem Gehäuse 12 verdreht wird.

Das geschilderte Grundprinzip lässt sich in unterschiedlichster Weise zur Verschleißnachstellung nutzen. Es muss nicht zwangsläufig der Rampenring relativ zu dem Gehäuse verdreht werden, sondern der Rampenring bzw. die Verzahnung 54 kann gehäusefest sein und die Baugruppe aus Federhebel 22 und Antriebsfeder 32 kann relativ zum Gehäuse verdreht werden.

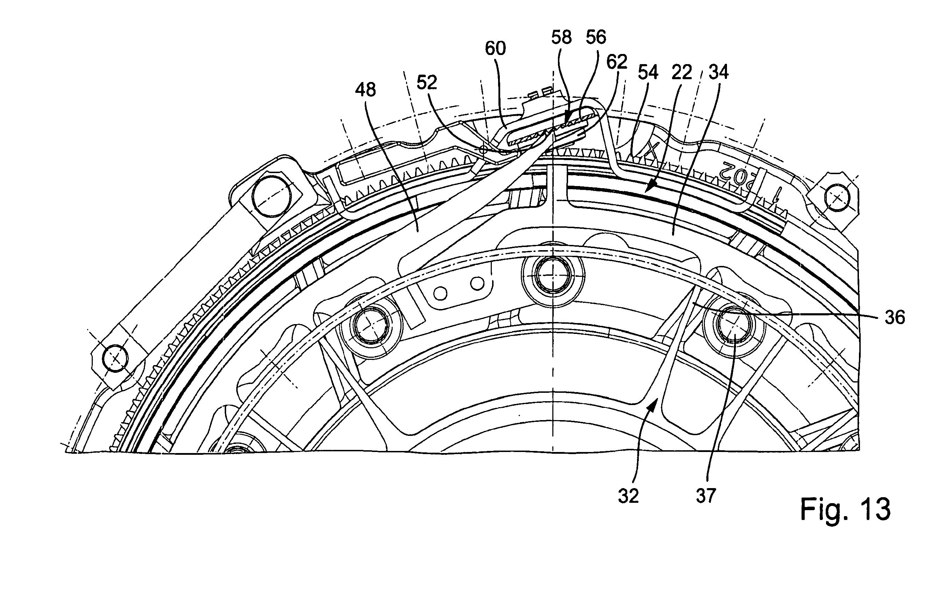

Fig. 13 zeigt eine Verstelleinrichtung, bei der die Klinke 48 nicht unmittelbar mit der Verzahnung 54 zusammenwirkt, sondern in eine Umfangsverzahnung 56 eingreift, die an einem Schneckenrad 58 ausgebildet ist, das in einem mit dem Federhebel 22 verbundenen Bügel 60 gelagert ist. Das Schneckenrad 58 weist an einer Stirnseite eine Schneckenrille 62 auf, die in die Verzahnung 54 eingreift. Neben der durch das Schneckenrad 58 möglichen Übersetzung liegt ein weiterer Vorteil, der mit der Anordnung gemäß Fig. 13 erzielt wird, darin, dass der Eingriff zwischen der Schneckenrille 62 und der Verzahnung 54 selbsthemmend ist, so dass Verschleißnachstellungen nur erfolgen, wenn sie durch die Klinke bzw. die Verformung des Federhebels ausgelöst sind.

Eine Eigenart der bekannten Nachstelleinrichtungen, die in vielfältiger Weise variiert werden können, liegt darin, dass bei jeder Kupplungsbetätigung die Verzahnung der Klinke sich relativ zur Verzahnung eines Gegenbauteils (beispielsweise eines Rampenrings oder einer gehäusefesten Verzahnung) unter gegenseitiger Anlage der Verzahnungen bewegt, wodurch die Verzahnungen verschleißgefährdet sind. Die Kontur der Verzahnungen ist ausschlaggebend für die einwandfreie Funktion der Nachstellung, so dass die Funktionssicherheit der Nachstellung mit zunehmender Betriebsdauer der Kupplung schlechter werden kann.

Der Erfindung liegt die Aufgabe zugrunde, eine Reibungskupplung mit integriertem Verschleißausgleich zu schaffen, bei der ein einwandfreier Verschleißausgleich auch über lange Betriebszeiten gewährleistet ist.

Diese Aufgabe wird mit einer Reibungskupplung gemäß dem Patentanspruch 1 gelöst.

Die Unteransprüche sind auf vorteilhafte Ausführungsformen und Weiterbildungen der erfindungsgemäßen Reibungskupplung gerichtet.

Somit wird die Lösung der Erfindungsaufgabe mit einer Reibungskupplung mit integriertem Verschleißausgleich erzielt, die enthält eine Verschleißausgleichseinrichtung mit einer Klinke, die in in einer Richtung Kraft übertragendem Eingriff mit einer an einem Gegenbauteil ausgebildeten Verzahnung ist und mit einem Betätigungsglied der Reibungskupplung derart gekoppelt ist, dass sie bei einem aufgrund von Verschleiß eines Reibbelags der Kupplung überschwelligen Bewegungshub des Betätigungsgliedes die Verzahnung überfährt und bei der Rückbewegung des Betätigungsgliedes das mit der Verzahnung ausgebildete Gegenbauteil für eine Verschleißnachstellung mitnimmt, und die weiter enthält eine Fliehkrafteinrichtung, die bei über einer vorbestimmten Schwelldrehzahl liegender Drehzahl der Kupplung die Bewegbarkeit der in die Verzahnung eingreifenden Klinke zumindest in eine Richtung etwa senkrecht zum Verzahnungseingriff sperrt.

Bei der vorgenannten Reibungskupplung besteht bei über einer vorbestimmten Schwelldrehzahl liegender Drehzahl der Kupplung ein dauerhafter Eingriff zwischen der Klinke und der Verzahnung, so dass es zu keinen mit Verschleiß verbundenen Relativbewegungen kommt.

Die Fliehkrafteinrichtung kann beispielsweise ein durch Fliehkraft betätigtes Bauteil aufweisen, das die Bewegbarkeit der Klinke sperrt.

Die Bewegbarkeit der Klinke in Umfangsrichtung kann durch einen Reibeingriff gesperrt sein.

Die Bewegbarkeit der Klinke in Umfangsrichtung kann auch durch einen Formeingriff gesperrt sein.

Mit Vorteil ist das durch Fliehkraft betätigte Bauteil ein um eine Schwenkachse schwenkbarer Hebel.

Bei einer bevorzugten Ausführungsform der erfindungsgemäßen Reibungskupplung ist die Klinke an dem Ringteil der Antriebsfeder über ein elastisch nachgiebiges Zwischenbauteil befestigt.

In radialem Abstand von der Klinke ist vorteilhafter Weise ein sich in Umfangsrichtung erstreckender Schenkel mit der Klinke verbunden, welcher Schenkel mit der Fliehkrafteinrichtung zusammen wirkt.

Die Fliehkrafteinrichtung kann mit der Klinke derart zusammen wirken, dass eine Bewegung der Verzahnung relativ zu der Klinke nur in Richtung entgegengesetzt zum Verschleißausgleich gesperrt ist.

Die Fliehkrafteinrichtung kann mit der Klinke derart zusammen wirken, dass eine Bewegung der Verzahnung relativ zu der Klinke in Verschleißausgleichsrichtung und entgegengesetzt dazu gesperrt ist.

Bei einer Ausführungsform der Reibungskupplung ist das Betätigungsbauteil durch einen Federhebel gebildet, der bei einer Betätigung der Kupplung konisch verformt wird und der eine Antriebsfeder trägt, die einen mit einem radialen Spalt versehenen Ringteil aufweist, von dem radial einwärts gerichtete Speichen ausgehen, die an dem Federhebel befestigt sind, wobei ein an einer Seite des Spaltes befindlicher Endbereich des Ringteils zumindest in Umfangsrichtung relativ zum Federhebel festgelegt ist, der auf der anderen Seite des Spaltes befindliche Endbereich des Ringteils mit der Klinke versehen ist, die radial auswärts elastisch in einen in eine Umfangsrichtung Drehmoment übertragenden Eingriff in die Verzahnung des Gegenbauteils vorgespannt ist, und die Anordnung der Antriebsfeder auf dem Federhebel derart ist, dass sich die Weite des Spaltes bei einer konischen Verformung des Federhebels ändert, wodurch die Klinke bei einer infolge eines Verschleißes des Reibbelags der Kupplung überschwelligen Verformung des Federhebels die am Gegenbauteil ausgebildete Verzahnung überläuft und bei einer Rückverformung des Federhebels eine Relativverdrehung zwischen dem Federhebel und dem Gegenbauteil in Richtung eines Ausgleiches des Reibbelagverschleißes herbeiführt.

Der Federhebel oder das Gegenbauteil kann relativ zu einem Kupplungsgehäuse verdrehbar sein und es kann eine Fliehkraftvorrichtung vorgesehen sein, die die Verdrehbarkeit bei über einer Schwelldrehzahl liegender Drehzahl der Kupplung sperrt.

Die Erfindung wird im Folgenden anhand schematischer Zeichnungen beispielsweise und mit weiteren Einzelheiten erläutert.

In den Figuren stellen dar:
- Fig. 1 bis 3: Skizzen zur Erläuterung des Eingriffs zwischen einer sich bei einer Kupplungsbetätigung bewegenden Klinke und einer Verzahnung,
- Fig. 4 bis 9: Skizzen des Eingriffs zwischen der Klinke und der Verzahnung bei unterschiedlichen Ausführungsformen einer Fliehkrafteinrichtung,
- Fig. 10: einen Prinziphalbschnitt durch eine an sich bekannte Reibungskupplung,
- Fig. 11: eine schematische Zeichnung zur Erläuterung des Funktionsprinzips einer an sich bekannten Verschleißnachstellung,
- Fig. 12: eine weitere schematische Zeichnung zur Erläuterung des Funktionsprinzips einer an sich bekannten Verschleißnachstellung, und
- Fig. 13: eine weitere schematische Zeichnung zur Erläuterung des Funktionsprinzips einer anderen Ausführungsform einer an sich bekannten Verschleißnachstellung.

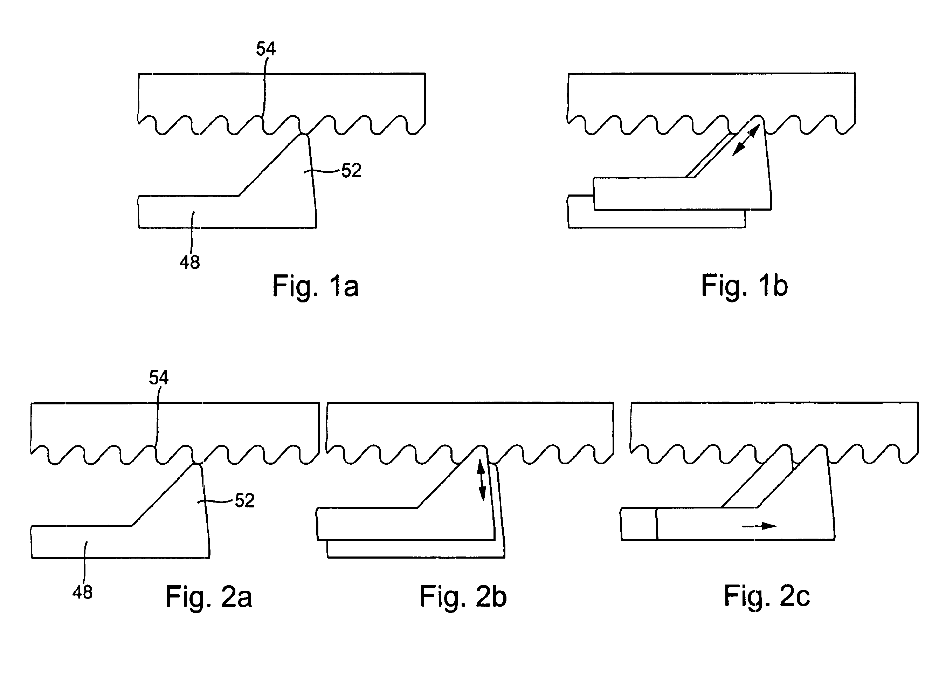

In den nachfolgenden Figuren sind für funktionsähnliche Bauteile die gleichen Bezugszeichen verwendet, wie in der bereits geschilderten Fig. 12. Die an ihrem freien Ende mit dem Zahn 52 ausgebildete Klinke 48 ist durch einen Federarm gebildet, der im Unterschied zum Federarm 50 der Fig. 12 zunächst vom Endbereich 46 des Ringteils 34 wie in Fig. 12 nach links in Umfangsrichtung verläuft, dann jedoch um 180 Grad auswärts abgebogen ist und in dem in Fig. 1 und den nachfolgenden Figuren dargestellten Endbereich endet. Die Verzahnung 54 kann an einem Rampenring, an einem gehäusefesten Bauteil oder an einem anderen Gegenbauteil ausgebildet sein, wobei eine Verschiebung der Verzahnung 54 zu einer Verschleißnachstellung führt. Deutlich sichtbar ist die sägezahnartige Ausbildung der Verzahnung 54 und eine entsprechende Ausbildung des Zahns 52 (an dessen Stelle auch eine Verzahnung an der Klinke 48 mit mehreren Zähnen ausgebildet sein kann). Die Klinke 48 ist elastisch in Richtung auf die Verzahnung 54 vorgespannt. Durch die sägezahnartige Ausbildung kann sich die Klinke 58 relativ zur Verzahnung 54 gemäß Fig. 1 nach links bewegen, wobei die Klinke 58 jeweils elastisch verformt wird. Bei einer Bewegung gemäß Fig. 1 nach rechts nimmt die Klinke 48 die Verzahnung 54 mit.

Fig. 1a stellt einen Zustand dar, der bei voll eingerückter Kupplung erreicht wird. Dabei hat sich der Zahn 52 nach links gerade so weit relativ zur Verzahnung 54 verschoben, dass die beiden Zahnscheitel in gegenseitiger Anlage sind und der Zahn 52 nicht in eine benachbarte Verzahnung springt. Bei seiner Rückwärtsbewegung in die Ausgangslage taucht der Zahn 52 in die Verzahnung 54 in den Ausgangszustand ein (Fig. 1 b), so dass die Verzahnung 54 insgesamt nicht oder allenfalls gering verschoben wird.

Fig. 2 zeigt im Figurenteil a den Zustand entsprechend Fig. 1a. Der Kupplungsbelagverschleiß ist jedoch so groß, dass der Zahn 52 der Klinke 48 sich bei voll betätigter Kupplung in eine ursprüngliche linksseitig benachbarte Verzahnungsstufe der Verzahnung 54 hineinbewegt und bei Beendigung der Kupplungsbetätigung, d.h. bei der Rückbewegung der Klinke 48 in den Ausgangszustand (oder darüber hinaus) die Verzahnung 54 in Richtung des Pfeils nach rechts verschiebt, was zu einer Nachstellung der Kupplung führt.

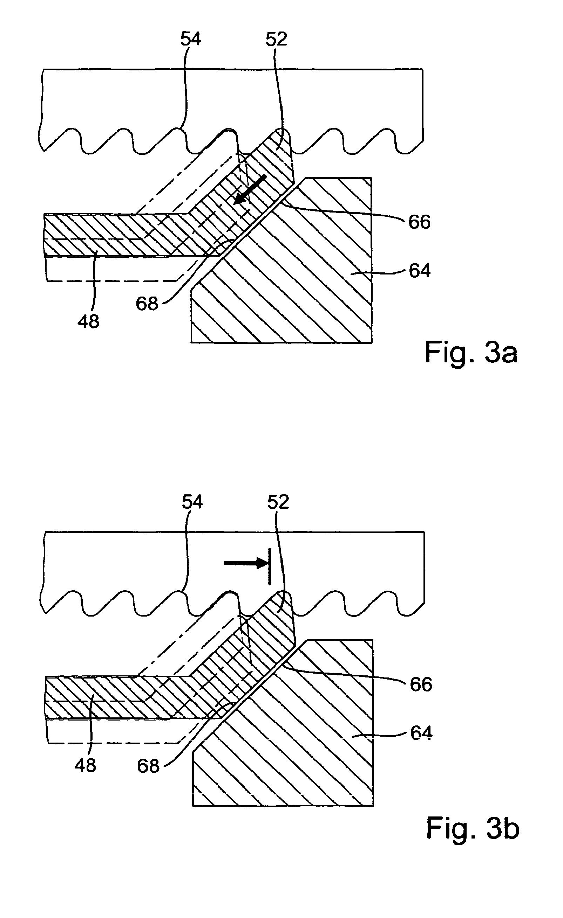

Die anhand der Fig. 1 und 2 geschilderte Anordnung hat die Eigenart, dass sich die Verzahnung 54 beispielsweise infolge dynamischer Einflüsse, wie Drehzahlschwankungen der Kupplungen, selbsttätig relativ zur Klinke 52 im Sinne einer Verschleißnachstellung nach rechts bewegen kann. Um dies zu verhindern, ist gemäß Fig. 3 ein Anschlag 64 vorgesehen, der zur Klinke 48 hin eine Schrägfläche 66 aufweist, an der die Klinke 48 mit einer entsprechenden Schrägfläche 68 anliegt. Mit dieser Anordnung wird folgendes erreicht:

Bei einer Bewegung der Klinke 58 gemäß Fig. 3 nach links (entsprechend einer Kupplungsbetätigung) kann sich der Zahn 52 aus der Verzahnung 54 in Richtung des Pfeils gemäß Fig. 3a schräg nach links unten entlang der durch die Schrägflächen 66 und 68 gegebenen Richtung, die etwa parallel mit der flachen Verzahnungsrichtung verläuft, herausbewegen, so dass die Nachstellfunktion gemäß Fig. 2 möglich ist.

Wenn sich dagegen die Verzahnung 54 infolge dynamischer Einflüsse relativ zur Klinke 48 nach rechts bewegen will, ohne dass die Klinke 48 selbst nach links verschoben wird, wird die Klinke 48 in Anlage an den Anschlag 64 gedrängt und kann sich nicht aus Verzahnung 54 herausbewegen, so dass eine selbsttätige Verschiebung der Verzahnung 54 nach rechts relativ zur Klinke 48 nicht möglich ist.

Der Anschlag 64 ist beispielsweise starr mit dem Federhebel oder dem Kupplungsgehäuse verbunden.

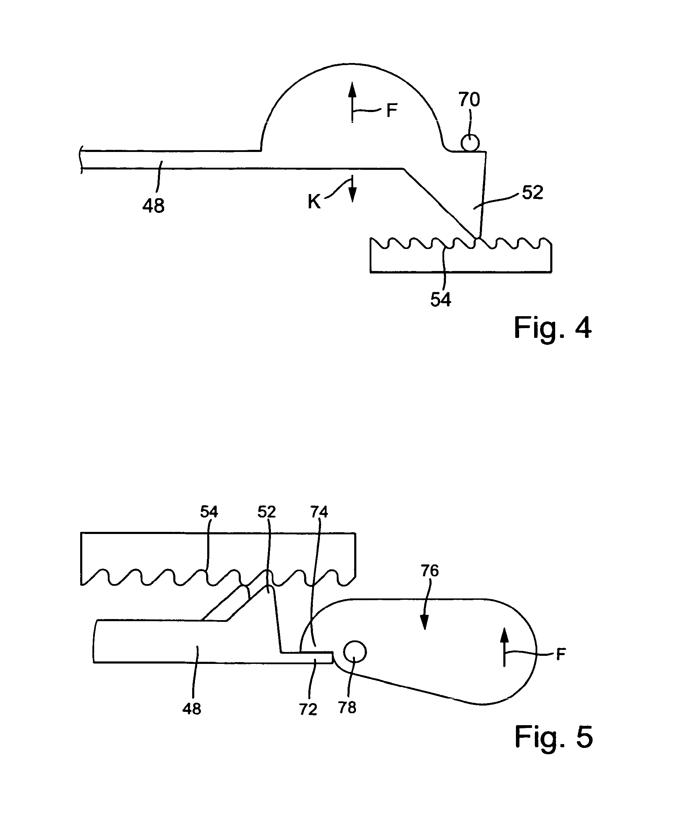

Fig. 4 zeigt eine nicht erfindungsgemäße Ausführungsform, bei der der Eingriff zwischen dem Zahn 52 und der Verzahnung 54 durch Fliehkraft gezielt beeinflusst wird, wobei die Anordnung gemäß den Fig. 1 und 2 zusätzlich derart abgeändert ist, dass die Verzahnung 54 nach radial außen offen ist und der Zahn 52 der Klinke 48 radial einwärts zeigt. Die beispielsweise über einen Federarm mit dem Ringteil 34 verbundene Klinke 48 ist elastisch in Richtung auf die Verzahnung 54 vorgespannt, wie durch den Pfeil K angedeutet. Mit zunehmender Drehzahl wirkt auf die Klinke 48 eine Fliehkraft F in Richtung des entsprechend gekennzeichneten Pfeils, die über einer vorbestimmten Schwelldrehzahl größer wird als die elastische Vorspannkraft K, so dass sich der Zahn 52 aus der Verzahnung 54 herausbewegt und bei Kupplungsbetätigung oberhalb dieser Drehzahl eine Relativbewegung zwischen dem Zahn 52 und der Verzahnung 54 in Umfangsrichtung (waagerechte Richtung in Fig. 4) ohne Berührung zwischen der Klinke und der Verzahnung erfolgt, so dass kein Verschleiß auftritt. Bei niedrigen Drehzahlen funktioniert die Verschleißnachstellung wie beschrieben, da die Fliehkraft F kleiner wird als die elastische Vorspannkraft K. Zur Begrenzung der radialen Auswärtsbewegung der Klinke 48 ist ein Anschlag 70 vorgesehen. Die Schwelldrehzahl, bei der die Klinke aus der Verzahnung freikommt, kann durch Abstimmung der trägen Masse der Klinke und deren Elastizität eingestellt werden.

Fig. 5 zeigt eine weitere Ausführungsform mit einer Fliehkrafteinrichtung. Bei der Ausführungsform gemäß Fig. 5 weist die Klinke 48 eine Nase 72 auf, die in Eingriff mit einem Ansatz 74 eines Fliehkrafthebels 76 ist, der unter dem Einfluss der Fliehkraft (Pfeil F) um eine beispielsweise gehäusefeste oder federhebelfeste Schwenkachse 78 verschwenkt. Dabei ist der Eingriff derart, dass in der Stellung gemäß Fig. 5 der Fliehkrafthebel 76 die Klinke 48 soweit aus der Verzahnung 54 bewegt hat, dass der Zahn 52 von der Verzahnung 54 frei ist.

Die Verschwenkung des Fliehkrafthebels 76 aus einer Ruhelage in die dargestellte Lage kann gegen die Kraft einer nicht dargestellten Torsionsfeder erfolgen. Weiter können Anschläge vorgesehen sein, die die Verschwenkbarkeit des Fliehkrafthebels zwischen einer Ruhestellung und der Maximalstellung gemäß Fig. 5 begrenzen.

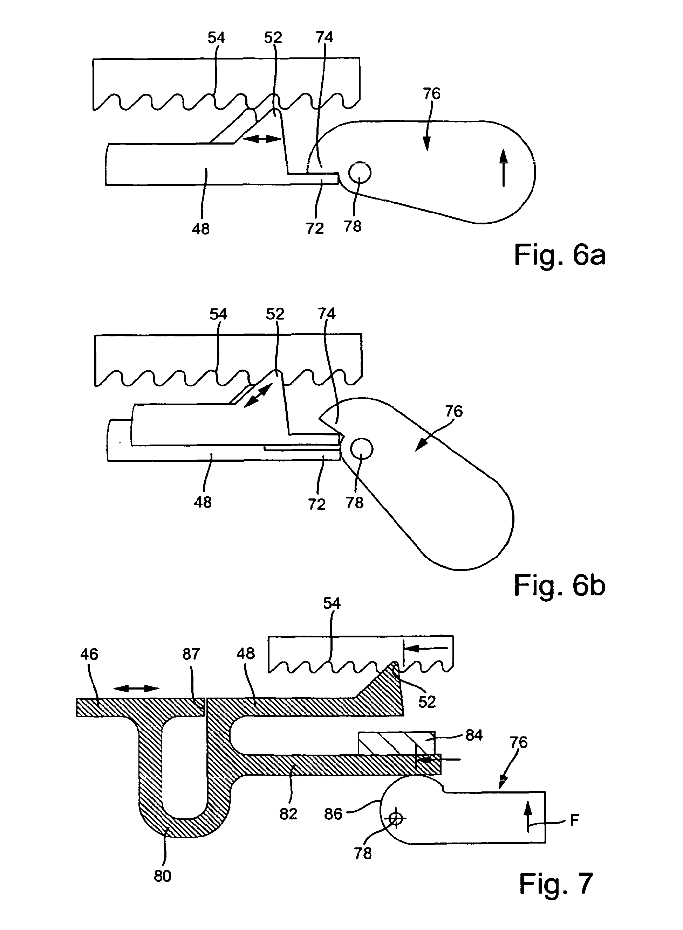

In Fig. 6a ist angedeutet, wie die Klinke 48 sich bei infolge von Fliehkraft verschwenktem Fliehkrafthebel 76 relativ zur Verzahnung 54 hin und her bewegen kann, ohne dass die Verzahnungen übereinander gleiten, d.h. ohne dass irgendein Verschleiß erfolgt. Fig. 6b zeigt die fliehkraftfreie Ruhestellung des Fliehkrafthebels. In dieser Ruhestellung ist der Zahn 52 infolge der elastischen Vorspannung der Klinke 48 in Eingriff mit der Verzahnung 54, so dass die geschilderte Verschleißnachstellung erfolgen kann.

Um eine ungewollte Nachstellung bei den Ausführungsformen gemäß Fig. 4 bis 6 infolge dynamischer Einflüsse bei hohen Kupplungsdrehzahlen zu vermeiden, kann eine weitere Fliehkraftsperre vorgesehen sein, die eine Relativbewegung der Verzahnung 54 relativ zum Kupplungsgehäuse oberhalb einer vorbestimmten Schwelldrehzahl sperrt. Bei Verwendung eines selbsthemmenden Schneckentriebs, wie beispielsweise anhand der Fig. 13 geschildert, ist eine solche zusätzliche Fliehkraftsperre für die Verzahnung 54 nicht erforderlich.

Im Folgenden werden Ausführungsformen erläutert, bei denen infolge von Fliehkraft nicht, wie bei den Ausführungsformen gemäß Fig. 4 bis 6 der Eingriff zwischen der Klinke und der Verzahnung bei hohen Kupplungsdrehzahlen gelöst wird, sondern die Bewegbarkeit der Klinke gezielt gesperrt wird.

Dazu ist gemäß Fig. 7 die Klinke 48 mit einem Bauteil, das sich bei einer Betätigung der Kupplung verschleißabhängig bewegt, beispielsweise dem Endbereich 46 des Ringteils 34 (Fig. 12) über ein elastisch verformbares Zwischenbauteil 80 verbunden, das eine Bewegung des Endbereiches 46 gemäß Fig. 7 nach links zulässt, obwohl die Bewegbarkeit der Klinke 48 in waagrechter Richtung gesperrt ist. Weiter ist das Zwischenbauteil 80 derart ausgebildet, dass der Zahn 52 der Klinke 48 wie bei den anderen Ausführungsformen elastisch in Richtung auf die Verzahnung 54 vorgespannt ist. Von dem insgesamt bügelförmig ausgebildeten Zwischenbauteil 80 geht unterhalb der Klinke 48 ein Schenkel 82 ab, der in einen Zwischenraum zwischen einem Anschlag 84 und einem Fliehkrafthebel 76 einragt. Der Fliehkrafthebel 76, der um die Schwenkachse 78 schwenkbar ist, weist eine Exzenterfläche 86 auf, die mit zunehmender Drehzahl den Schenkel 82 gegen den Anschlag 84 drängt, so dass der Schenkel 82 oberhalb einer vorbestimmten Schwelldrehzahl in Reibeingriff mit dem Anschlag 84 bzw. der Exzenterfläche 86 ist. Auf diese Weise ist die Klinke 48 oberhalb der Schwelldrehzahl in Verstellrichtung unbeweglich gehalten, so dass es bei Drehzahlen über der Schwelldrehzahl zu keinen Relativbewegungen zwischen der Klinke und der Verzahnung 54 kommt, obwohl sich das bei jeder Kupplungsbetätigung bewegte Teil (beispielsweise der Endbereich 46) bewegt.

Der Fliehkrafthebel 76 kann von der Fliehkraft gegen die Kraft einer nicht dargestellten Rückstellfeder bewegt werden und die Schwenkbarkeit des Fliehkrafthebels kann durch Anschläge begrenzt sein.

Die Elastizität des Zwischenbauteils 80 ist derart, dass eine Bewegung des Endbereichs 46 nach links bei gelöstem Eingriff zwischen Fliehkrafthebel 76 und Schenkel 82 die Klinke 48 mitnimmt, so dass der Zahn 52 die Verzahnung 54 überfährt, bei einer anschließenden Rückbewegung des Endbereichs 46 gemäß Fig. 7 nach rechts eine Stirnseite des Endbereichs 46 jedoch eine Anlagefläche 87 bildet, die an der Klinke 48 anliegt, so dass die Klinke 48 ohne Elastizität zwischen dem Endbereich 46 und der Klinke 48 nach rechts bewegt wird und die Verzahnung bzw. das damit verbundene Bauteil nach rechts verschiebt.

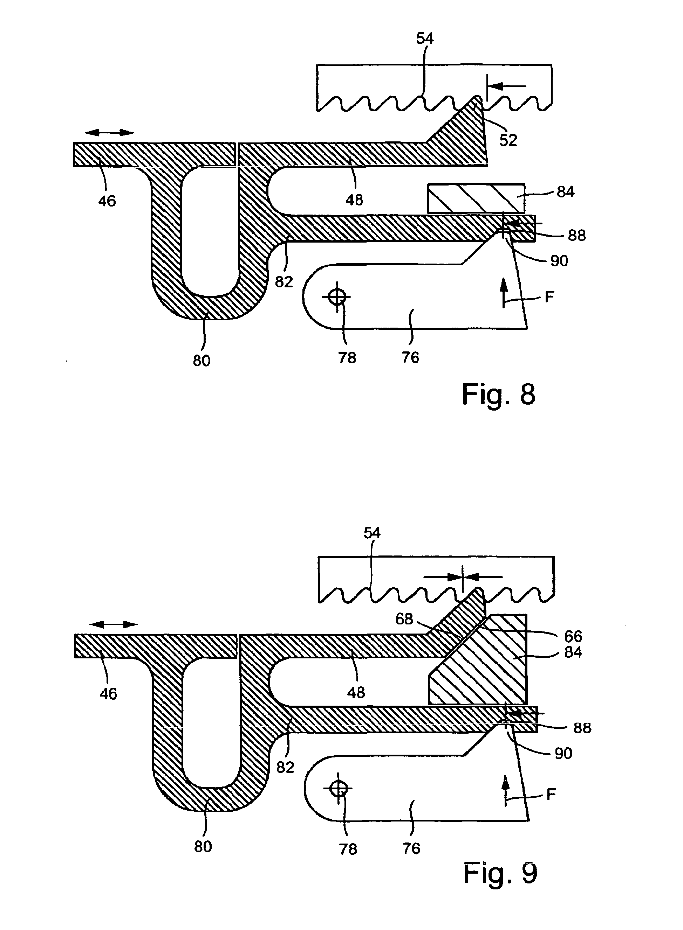

Fig. 8 zeigt eine gegenüber der Fig. 7 abgeänderte Ausführungsform, bei der der Eingriff zwischen dem Fliehkrafthebel 76 und dem Schenkel 82 ein Formeingriff ist, indem der Schenkel 82 mit einer Kerbe 88 und der Fliehkrafthebel 76 mit einem entsprechenden Vorsprung 90 ausgebildet sind.

Bei den Ausführungsformen gemäß Fig. 7 und 8 ist eine Bewegung der Verzahnung 54 relativ zur Klinke 48 gemäß den Figuren nach links blockiert, so dass eine Rückverstellung eines erfolgten Verschleißausgleiches infolge dynamischer Einflüsse unterbunden ist.

Fig. 9 zeigt eine der Fig. 8 entsprechende Anordnung, bei der zusätzlich der Anschlag 84 ähnlich wie bei der anhand der Fig. 3 geschilderten Ausführungsform mit einer Schrägfläche 66 ausgebildet ist, die mit einer entsprechenden Schrägfläche 68 der Klinke 48 zusammen wirkt. Wie aus der Figur ohne weiteres ersichtlich, ist bei der Ausführungsform gemäß Fig. 9 die Bewegbarkeit der Verzahnung 54 relativ zur Klinke 48 bei Drehzahlen oberhalb einer Schwelldrehzahl in beide Richtungen gesperrt, wenn nicht die Klinke 48 wie bei einer Verschleißnachstellung erforderlich, gemäß Fig. 9 von dem Bauteil 46 her aktiv nach links bewegt wird, was nur möglich ist, wenn der Fliehkrafthebel 76 den Schenkel 82 freigibt. Es versteht sich, dass bei der Anordnung gemäß Fig. 9 auch die Konstruktion des Fliehkrafthebels 76 gemäß Fig. 7 verwendet werden kann.

Die beispielhaft beschriebenen Ausführungsformen, die die Fliehkraft dazu nützen, dass bei über einer Schwelldrehzahl liegenden Drehzahlen eine Verschleißnachstellung unterbleibt, können in vielfältiger Weise abgeändert werden. Beispielsweise kann der Fliehkrafthebel durch eine linear bewegliche Masse ersetzt werden, die eine der Funktion des Fliehkrafthebels entsprechende Funktion ausführt.

### Bezugszeichenliste

- 10: Reibungskupplung
- 12: Gehäuse
- 14: Gegendruckplatte
- 16: Anpressplatte
- 18: Reibbelag
- 20: Kupplungsscheibe
- 22: Federhebel
- 24: Ringscheibenbereich
- 26: innerer Umfangsrand
- 28: Betätigungsbauteil
- 30: Rampenring
- 32: Antriebsfeder
- 34: Ringteil
- 36: Speichen
- 37: Niet
- 38: Distanzstück
- 42: Spalt
- 44: Endbereich
- 46: Endbereich
- 48: Klinke
- 50: Federarm
- 52: Zahn
- 54: Verzahnung
- 56: Umfangsverzahnung
- 58: Schneckenrad
- 60: Bügel
- 62: Schneckenrille
- 64: Anschlag
- 66: Schrägfläche
- 68: Schrägfläche
- 70: Anschlag
- 72: Nase
- 74: Ansatz
- 76: Fliehkrafthebel
- 78: Schwenkachse
- 80: Zwischenbauteil
- 82: Schenkel
- 84: Anschlag
- 86: Exzenterfläche
- 87: Anlagefläche
- 88: Kerbe

## Patentansprüche

1. Reibungskupplung mit integriertem Verschleißausgleich, enthaltend eine Verschleißausgleichseinrichtung mit einer Klinke (48), die in in einer Richtung Kraft übertragendem Eingriff mit einer an einem Gegenbauteil ausgebildeten Verzahnung (54) ist und mit einem Betätigungsglied der Reibungskupplung derart gekoppelt ist, dass sie bei einem aufgrund von Verschleiß eines Reibbelags der Kupplung überschwelligen Bewegungshub des Betätigungsgliedes die Verzahnung überfährt und bei der Rückbewegung des Betätigungsgliedes das mit der Verzahnung (54) ausgebildete Gegenbauteil für eine Verschleißnachstellung mitnimmt, **gekennzeichnet durch** eine Fliehkrafteinrichtung, die bei über einer vorbestimmten Schwelldrehzahl liegender Drehzahl der Kupplung die Bewegbarkeit der in die Verzahnung (54) eingreifenden Klinke (48) zumindest in eine Richtung etwa senkrecht zum Verzahnungseingriff sperrt.

2. Reibungskupplung nach Anspruch 1, **dadurch gekennzeichnet, dass** die Fliehkrafteinrichtung ein durch Fliehkraft betätigtes Bauteil (76) aufweist, das die Bewegbarkeit der Klinke (48) sperrt.

3. Reibungskupplung nach Anspruch 1 oder 2, **dadurch gekennzeichnet, dass** die Bewegbarkeit der Klinke (48) durch einen Reibeingriff gesperrt ist.

4. Reibungskupplung nach Anspruch 1 oder 2 , **dadurch gekennzeichnet, dass** die Bewegbarkeit der Klinke (48) durch einen Formeingriff gesperrt ist.

5. Reibungskupplung nach einem der Ansprüche 2 bis 4, **dadurch gekennzeichnet, dass** das durch Fliehkraft betätigte Bauteil (76) ein um eine Schwenkachse schwenkbarer Fliehkrafthebel ist.

6. Reibungskupplung nach einem der Ansprüche 1 bis 5, **dadurch gekennzeichnet, dass** die Klinke (48) über ein Zwischenbauteil (80) mit dem Betätigungsglied (22) der Kupplung verbunden ist, das in der Richtung, in der die Verzahnung (54) durch die Klinke (48) überfahrbar ist, elastisch nachgiebig ist.

7. Reibungskupplung nach Anspruch 6, **dadurch gekennzeichnet, dass** in radialem Abstand von der Klinke (48) ein sich in Umfangsrichtung erstreckender Schenkel (82) mit der Klinke (48) verbunden ist, welcher Schenkel mit der Fliehkrafteinrichtung zusammenwirkt.

8. Reibungskupplung nach einem der Ansprüche 1 bis 7, **dadurch gekennzeichnet, dass** die Fliehkrafteinrichtung mit der Klinke (48) derart zusammenwirkt, dass eine Bewegung der Verzahnung (54) relativ zu der Klinke (48) nur in Richtung entgegengesetzt zum Verschleißausgleich gesperrt ist.

9. Reibungskupplung nach einem der Ansprüche 1 bis 8, **dadurch gekennzeichnet, dass** die Fliehkrafteinrichtung mit der Klinke (48) derart zusammenwirkt, dass eine Bewegung der Verzahnung (54) relativ zu der Klinke (48) in Verschleißausgleichsrichtung und entgegengesetzt dazu gesperrt ist.

10. Reibungskupplung nach einem der Ansprüche 1 bis 9, **dadurch gekennzeichnet, dass** das Betätigungsbauteil durch einen Federhebel (22) gebildet ist, der bei einer Betätigung der Kupplung konisch verformt wird und der eine Antriebsfeder (32) trägt, die einen mit einem radialen Spalt (42) versehenen Ringteil (34) aufweist, von dem radial einwärts gerichtete Speichen (36) ausgehen, die an dem Federhebel (22) befestigt sind, wobei ein an einer Seite des Spaltes (42) befindlicher Endbereich (44) des Ringteils (34) zumindest in Umfangsrichtung relativ zum Federhebel (22) festgelegt ist, der auf der anderen Seite des Spaltes (42) befindliche Endbereich (46) des Ringteils (34) mit der Klinke (48) versehen ist, die radial auswärts elastisch in einen in eine Umfangsrichtung Drehmoment übertragenden Eingriff in die Verzahnung (54) des Gegenbauteils vorgespannt ist, und die Anordnung der Antriebsfeder (32) auf dem Federhebel (22) derart ist, dass sich die Weite des Spaltes (42) bei einer konischen Verformung des Federhebels (22) ändert, wodurch die Klinke bei einer infolge eines Verschleißes des Reibbelags (18) der Kupplung überschwelligen Verformung des Federhebels (22) die am Gegenbauteil ausgebildete Verzahnung (54) überläuft und bei einer Rückverformung des Federhebels (22) eine Relativverdrehung zwischen dem Federhebel (22) und dem Gegenbauteil in Richtung eines Ausgleiches des Reibbelagverschleißes herbeiführt.

11. Reibungskupplung nach Anspruch 10, **dadurch gekennzeichnet, dass** der Federhebel (22) oder das Gegenbauteil relativ zu einem Kupplungsgehäuse (12) verdrehbar ist und eine Fliehkrafteinrichtung vorgesehen ist, die die Verdrehbarkeit bei über einer Schwelldrehzahl liegender Drehzahl der Kupplung sperrt.

## Claims

1. Friction clutch with integrated wear compensation, comprising a wear compensation device with a pawl (48) which is in engagement, transmitting force in one direction, with a toothing system (54) which is configured on a mating component, and is coupled to an actuating element of the friction clutch in such a way that it moves over the toothing system in the case of an above-threshold movement stroke of the actuating element on account of wear of a friction lining of the clutch, and drives the mating component, which is configured with the toothing system (54), for wear adjustment in the case of the return movement of the actuating element, **characterized by** a centrifugal force device which, in the case of a rotational speed of the clutch which lies above a predefined threshold rotational speed, blocks the mobility of the pawl (48) which engages into the toothing system (54), at least in one direction approximately perpendicularly with respect to the toothing engagement.

2. Friction clutch according to Claim 1, **characterized in that** the centrifugal force device has a component (76) which is actuated by centrifugal force and blocks the mobility of the pawl (48).

3. Friction clutch according to Claim 1 or 2, **characterized in that** the mobility of the pawl (48) is blocked by a frictional engagement.

4. Friction clutch according to Claim 1 or 2, **characterized in that** the mobility of the pawl (48) is blocked by a positively locking engagement.

5. Friction clutch according to one of Claims 2 to 4, **characterized in that** the component (76) which is actuated by centrifugal force is a centrifugal lever which can be pivoted about a pivot axis.

6. Friction clutch according to one of Claims 1 to 5, **characterized in that** the pawl (48) is connected via an intermediate component (80) to the actuating element (22) of the clutch, which actuating element (22) is elastically resilient in the direction, in which the toothing system (54) can be moved over by the pawl (48).

7. Friction clutch according to Claim 6, **characterized in that**, at a radial spacing from the pawl (48), a limb (82) which extends in the circumferential direction is connected to the pawl (48), which limb interacts with the centrifugal force device.

8. Friction clutch according to one of Claims 1 to 7, **characterized in that** the centrifugal force device interacts with the pawl (48) in such a way that a movement of the toothing system (54) relative to the pawl (48) is blocked only in the opposite direction to the wear compensation.

9. Friction clutch according to one of Claims 1 to 8, **characterized in that** the centrifugal force device interacts with the pawl (48) in such a way that a movement of the toothing system (54) relative to the pawl (48) is blocked in the wear compensation direction and in the opposite direction thereto.

10. Friction clutch according to one of Claims 1 to 9, **characterized in that** the actuating component is formed by a spring lever (22) which is deformed conically upon actuation of the clutch and which carries a drive spring (32) which has a ring part (34) which is provided with a radial gap (42) and from which radially inwardly directed spokes (36) emanate which are fastened to the spring lever (22), one end region (44), situated on one side of the gap (42), of the ring part (34) being fixed at least in the circumferential direction relative to the spring lever (22), the other end region (46), situated on the other side of the gap (42), of the ring part (34) being provided with the pawl (48) which is elastically prestressed radially outwards into an engagement, transmitting torque in a circumferential direction, into the toothing system (54) of the mating component, and the arrangement of the drive spring (32) on the spring lever (22) being such that the width of the gap (42) changes in the case of a conical deformation of the spring lever (22), as a result of which the pawl moves over the toothing system (54) which is formed on the mating component in the case of an above-threshold deformation of the spring lever (22) as a consequence of wear of the friction lining (18) of the clutch, and causes a relative rotation between the spring lever (22) and the mating component in the direction of compensation of the friction lining wear in the case of a recovery of the spring lever (22).

11. Friction clutch according to Claim 10, **characterized in that** the spring lever (22) or the mating component can be rotated relative to a clutch housing (12), and a centrifugal force device is provided which blocks the rotary mobility in the case of a rotational speed of the clutch which lies above a threshold rotational speed.

## Revendications

1. Embrayage à friction à compensation d'usure intégrée, contenant un dispositif de compensation d'usure avec un cliquet (48) qui est en engagement de transfert de force dans une direction avec une denture (54) réalisée sur un composant opposé et qui est accouplé à un organe d'actionnement de l'embrayage à friction de telle sorte qu'il dépasse la denture en cas de course de déplacement de l'organe d'actionnement excessive du fait de l'usure d'une garniture de friction de l'embrayage et de telle sorte qu'il entraîne le composant opposé réalisé avec la denture (54) lors du mouvement de retour de l'organe d'actionnement en vue de réaliser un ajustement de l'usure, **caractérisé par** un dispositif à force centrifuge qui, lorsque la vitesse de rotation est au-dessus d'un seuil de vitesse de rotation prédéterminé de l'embrayage, bloque la capacité de déplacement du cliquet (48) s'engageant dans la denture (54) au moins dans une direction approximativement perpendiculaire à l'engagement de la denture.

2. Embrayage à friction selon la revendication 1, **caractérisé en ce que** le dispositif à force centrifuge présente un composant (76) actionné par la force centrifuge, qui bloque la capacité de déplacement du cliquet (48).

3. Embrayage à friction selon la revendication 1 ou 2, **caractérisé en ce que** la capacité de déplacement du cliquet (48) est bloquée par un engagement par friction.

4. Embrayage à friction selon la revendication 1 ou 2, **caractérisé en ce que** la capacité de déplacement du cliquet (48) est bloquée par un engagement positif.

5. Embrayage à friction selon l'une quelconque des revendications 2 à 4, **caractérisé en ce que** le composant (76) actionné par la force centrifuge est un levier à force centrifuge pouvant pivoter autour d'un axe de pivotement.

6. Embrayage à friction selon l'une quelconque des revendications 1 à 5, **caractérisé en ce que** le cliquet (48) est connecté par le biais d'un composant intermédiaire (80) à l'organe d'actionnement (22) de l'embrayage, qui est flexible élastiquement dans la direction dans laquelle la denture (54) peut être dépassée par le cliquet (48).

7. Embrayage à friction selon la revendication 6, **caractérisé en ce qu'**une branche (82) s'étendant dans la direction périphérique est connectée au cliquet (48) à distance radiale du cliquet (48), laquelle branche coopère avec le dispositif à force centrifuge.

8. Embrayage à friction selon l'une quelconque des revendications 1 à 7, **caractérisé en ce que** le dispositif à force centrifuge coopère avec le cliquet (48) de telle sorte qu'un mouvement de la denture (54) par rapport au cliquet (48) ne soit bloqué que dans la direction opposée à la compensation de l'usure.

9. Embrayage à friction selon l'une quelconque des revendications 1 à 8, **caractérisé en ce que** le dispositif à force centrifuge coopère avec le cliquet (48) de telle sorte qu'un mouvement de la denture (54) par rapport au cliquet (48) soit bloqué dans la direction de compensation de l'usure et dans la direction opposée.

10. Embrayage à friction selon l'une quelconque des revendications 1 à 9, **caractérisé en ce que** le composant d'actionnement est formé par un levier à ressort (22) qui est déformé coniquement dans le cas d'un actionnement de l'embrayage et qui porte un ressort d'entraînement (32) qui présente une partie annulaire (34) pourvue d'une fente radiale (42), depuis laquelle partie annulaire partent des rayons (36) orientés radialement vers l'intérieur, qui sont fixés au levier à ressort (22), une région d'extrémité (44) de la partie annulaire (34) se trouvant d'un côté de la fente (42) étant fixée au moins dans la direction périphérique par rapport au levier à ressort (22), la région d'extrémité (46) de la partie annulaire (34) se trouvant de l'autre côté de la fente (42) étant pourvue du cliquet (48), qui est précontraint élastiquement radialement vers l'extérieur en engagement à transfert de couple dans une direction périphérique dans la denture (54) du composant opposé, et l'agencement du ressort d'entraînement (32) sur le levier à ressort (22) étant tel que la largeur de la fente (42) dans le cas d'une déformation conique du levier à ressort (22) varie, de sorte que le cliquet, en cas de déformation excessive du levier à ressort (22) résultant d'une usure de la garniture de friction (18) de l'embrayage, dépasse la denture (54) réalisée sur le composant opposé et en cas de déformation en retour du levier à ressort (22), provoque une rotation relative entre le levier à ressort (22) et le composant opposé dans la direction d'une compensation de l'usure de la garniture de friction.

11. Embrayage à friction selon la revendication 10, **caractérisé en ce que** le levier à ressort (22) ou le composant opposé peut tourner par rapport à un boîtier d'embrayage (12) et un dispositif à force centrifuge est prévu, lequel bloque la capacité de rotation lorsque la vitesse de rotation de l'embrayage est supérieure à un seuil de vitesse de rotation.
